# EUROPÄISCHE PATENTANMELDUNG

(11) **EP 1 078 572 A1**
(43) Veröffentlichungstag der Anmeldung: **28.02.2001**
(21) Anmeldenummer: 99116736.2
(22) Anmeldetag: 27.08.1999
(51) Int. Cl.: A01M 25/00, A01M 1/20

(54) **Schädlingsfalle**

(71) Anmelder: Langbauer, Josef, 83355 Grabenstätt (DE)
(72) Erfinder: Langbauer, Josef, 83355 Grabenstätt (DE)

(57) **Zusammenfassung**

Bei dieser in der Figur dargestellten Schneckenfalle (1) ist eine frei aufstellbare Schale (2) vorgesehen, auf deren äußeren Rand (6) ein Kragen (12) aufgeschnappt werden kann, dessen Innenring (13) frei über den Innenraum (2a) der Schale (2) ragt und dessen Außenring (14) eine Art Aufstiegshilfe in Form einer Rampe bildet, so daß die Schnecken leicht zu dem in der Schale (2) befindlichen Köder (3) gelangen und nicht wieder heraus können.

## Beschreibung

Die Erfindung bezieht sich auf eine Schädlingsfalle, insbesondere auf ein freiaufstellbares Schneckenfanggerät mit einer Schale für die Aufnahme eines Köders und mit einem Dach.

Aus der US-PS 35 50 308 ist ein Gerät bekannt, bei dem eine Schale einen umlaufenden, nach außen weisenden Rand aufweist, wobei sie bis zu diesem Rand ins Erdreich eingesetzt wird.

Das Dach ist mit einem Stiel versehen, welcher in eine Aufnahme am Boden im Zentrum der Schale einsetzbar ist. Zwischen dem Schalenrand und dem Dach verbleibt ein umlaufender Schlitz, durch den die Schnecken in das Schaleninnere gelangen. Ein nach Innen gezogener weiterer Rand verhindert, daß die Schnecken wieder ins Freie gelangen können. Das Einsetzen der Schale in das Erdreich bereitet Mühe, aber besonders nachteilig ist es, daß bei starkem Regen die Gefahr besteht, das Wasser ins Innere der Schale gelangen kann. Dies hat zum einen die Folge, daß ein darin befindlicher Köder verdünnt wird, was seine Unwirksamkeit nach sich zieht, zum zweiten steigt aber auch der Flüssigkeitsspiegel an, so daß in der Flüssigkeit befindliche Schädlinge ohne Probleme die Schale wieder verlassen können, falls sie noch am Leben sind. Ein optional vorgeschlagenes schirmartiges Dach verhindert zwar das direkte Hineinregnen, aber die bündig mit der Bodenoberfläche verlaufende Schalenkante ermöglicht dennoch das Eindringen von Wasser. Sollte die Schale entgegen der dort gelieferten Beschreibung allerdings nicht bündig mit der Oberfläche des Bodens in diesen eingegraben, sondern einfach auf diesem aufgestellt werden, so ist die beabsichtigte Wirkung als Falle sehr zweifelhaft, da die zu fangenden Schädlinge nicht über den nach außen weisenden Rand der Schale kriechen und daher nicht ins Innere der Falle gelangen können.

Eine weitere Schneckenfalle ist aus der CH-PS 342 782 bekannt. Bei diesem Gerät muß eine Unterschale mittels eines Stiftes, der eine Deckelschale trägt und durch den Boden der Unterschale hindurchreicht, in den Boden eingedrückt werden. Diese Konstruktion weist ähnliche Nachteile auf, wie die zuvor beschriebene. Da die Verbindung zwischen der Oberschale und der Unterschale und dem durch sie hindurchgehenden Stift abdichtend sein muß, damit kein Gift den Boden kontaminiert, ist die Handhabung umständlich und unsicher.

Diese Nachteile sollen durch eine Schneckenfalle behoben sein, die in der DE-PS 28 27 528 beschrieben ist. Die dortige Schneckenfalle weist die Form eines Topfes auf, der frei auf den Boden gestellt werden kann, ohne ihn ins Erdreich einlassen zu müssen. Die Schnecken sollen über einige Durchbrüche im Bereich des oberen Topfrandes in das Innere des Topfes gelangen. Um das Eindringen von Regenwasser zu verhindern, ist ein Dach vorgesehen, welches einen ringförmigen Ansatz aufweist, mit welchem das Dach in den oberen Topfrand einführbar ist. Nachteilig an diesem Vorschlag scheint zu sein, daß die Schnecken mühsam den Topf erklimmen müssen, um dann über eine der Öffnungen - die sie erst finden müssen - schließlich in das Innere des Topfes gelangen zu können. Dies beeinträchtigt die Wirksamkeit der Falle in erheblichem Maße.

Der vorliegenden Erfindung liegt die Aufgabe zugrunde, eine Schädlingsfalle der eingangs beschriebenen Art zu schaffen, welche die Nachteile des Standes der Technik nicht aufweist, die einen hohen Wirkungsgrad erwarten läßt und die einfach in ihrer Handhabung und Pflege ist.

Diese Aufgabe wird mit einer Schädlingsfalle gelöst, welche die Merkmale des Anspruches 1 aufweist.

Durch die Merkmale der abhängigen Ansprüche wird die Erfindung in vorteilhafter Weise weiter ausgestaltet.

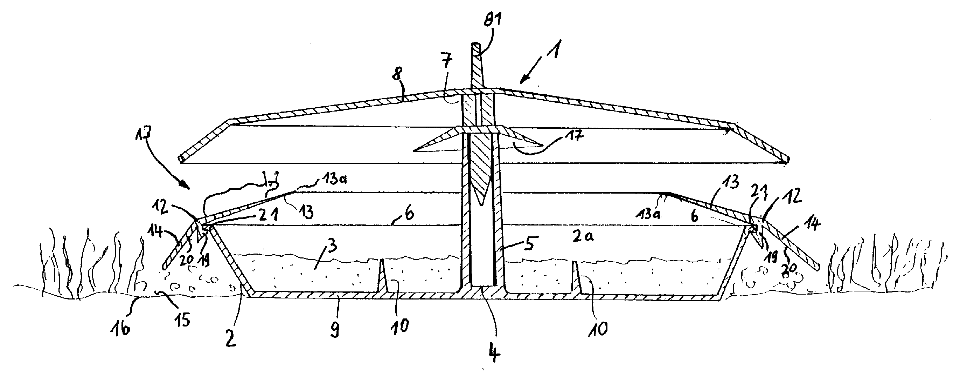

Anhand der Zeichnung wird die Erfindung mit Hilfe eines Ausführungsbeispieles nachstehend noch näher erläutert.

Die Figur zeigt ein Schneckenfanggerät - nachstehend als Schneckenfalle 1 bezeichnet - welches eine Schale 2 zur Aufnahme eines Köders 3 aufweist. Der Köder 3 kann durch Bier oder auch andere ungiftige aber auch giftige Substanzen gebildet werden. Die Schale 2 ist rotationssymmetrisch, kann aber auch einen beliebigen anderen Grundriß haben. Im Zentrum 4 weist die Schale 2 einen Ansatz 5 auf, der in seiner Höhe über einen am Umfang der Schale 2 befindlichen Rand 6 hinausragt. Der Ansatz 5 nimmt einen Stiel 7 auf, welcher ein Dach 8 trägt, das in seiner Ausdehnung den Rand 6 der Schale 2 überragt. Das Dach 8 verhindert das Eindringen von Regenwasser oder Spritzwasser in die Schale 2. Dadurch wird eine Verdünnung des Köders 3 und auch eine unerwünschte Erhöhung des Flüssigkeitspegels im Innern der Schale 2 sicher vermieden. Zur Kontrolle des geeigneten Flüssigkeitspegels sind am Boden 9 der Schale 2 Markierungs-Stege 10 angebracht, die den zulässigen Flüssigkeitspegel markieren. Die Bedienungsperson füllt soviel vom Köder in die Schale 2, daß die Markierungs-Stege 10 gerade bedeckt sind. Eine Begrenzung des Flüssigkeitspegels erleichtert das Gefangenhalten der Schnecken bis zu deren Tod, da diese nicht schwimmend über den Rand 6 der Schale 2 entkommen können, was durch einen zu hohen Flüssigkeitspegel erleichtert würde.

Das Entkommen der gefangenen Schnecken wird noch entschieden erschwert, weil am Rand 6 der Schale 2 ein Kragen 12 montiert ist, der einen Innenring 13 und einen Außenring 14 aufweist. Der Innenring 13 bildet einen Überhang 13a, welcher frei über dem Innenraum 2a der Schale 2 in diesen hineinragt. Dieser Innenring 13 verhindert durch die schneidenförmige Ausgestaltung des Überhanges 13a und seinen nach oben gerichteten Aufstellwinkel das Umkriechen dieses frei über den Innenraum 2a der Schale 2 ragenden Überhanges 13a von innen.

Der Kragen 12 erstreckt sich mit seinem Außenring 14 auch über den Rand 6 der Schale 2 nach außen, was einen besonders vorteilhaften Effekt für die Wirksamkeit der Schneckenfalle 1 bewirkt. Der Kragen 12 weist im Außenbereich der Schneckenfalle 1 einen Außenring 14 auf, der nach unten zur Oberfläche 15 des Bodens 16 gerichtet ist, auf dem die Schneckenfalle 1 aufgestellt wird. Dieser Außenring 14 des Kragens 12 reicht bis in die Nähe der Oberfläche 15 des Bodens 16 und erleichtert den durch den Köder 3 angelockten Schnecken den Anstieg über den Rand 6 der Schale 2. Der Außenring 14 bildet demgemäß eine Aufstieghilfe für die zu fangenden Schnecken in Form einer Rampe.

Die geköderte Schnecke kriecht aus der Umgebung der Schneckenfalle 1 auf diese zu und findet einen leichten Aufstieg über den Außenring 14 zur Schale 2, wie auch immer der Boden 16 beschaffen sein mag, von dem aus sie sich der Schneckenfalle 1 nähert. Dies kann sowohl mehr oder weniger glattes Erdreich, aber auch Gras oder dergleichen sein. Der Außenring 14 bildet in jedem Fall durch seine rampenartige Ausgestaltung eine ideale Aufstieghilfe für die Schnecke, die überall am Umfang der Schale 2 bis zum Überhang 13a des Innenringes 13 vorkriechen kann, um von dort beim oder nach dem Konsumieren des Köders 3 in den Inneraum 2a der Schale 2 zu fallen. Dort ist sie gefangen und kann nicht mehr entkommen.

Um ein Entkommen über den Ansatz 5 und den Stiel 7 zu verhindern, ist konzentrisch zum Stiel 7 unterhalb des Daches 8 ein Abweisring 17 vorhanden. Dieser Abweisring 17 ist im Durchmesser kleiner als der Durchmesser des Daches 8. Der Abweisring 17 ist gegen die Oberfläche der Schale 2 nach unten geneigt, so daß die gefangene Schnecke nicht über diesen Abweisring 17 hinauskriechen und entkommen kann. Gleichzeitig bildet der Abweisring 17 einen einstellbaren Höhenanschlag für den Abstand des Daches 8 von der Schale 2. Zwischen der Schale 2 und dem Dach 8 wird in dieser Weise ein ringförmiger Spalt 18 gebildet, der den zu fangenden Schnecken das Einkriechen über die Rampe des Außenringes 14 ermöglicht, der jedoch verhindert, daß andere Tiere, wie Vögel, Katzen, Hunde oder dergleichen, - die nicht den Schädlingen zugeordnet werden - zu dem Köder 3 in die Schale 2 gelangen können.

Es versteht sich, daß die Konstruktion des Ansatzes und des Stieles auch in anderer Weise gelöst werden kann. So kann der Ansatz als Stiel ausgebildet sein, über den sich eine Hülse, die einen Abweisring und ein Dach trägt, an der Schale abstützt.

Besonders vorteilhaft ist es, wenn der Kragen 12 über Einrastvorrichtungen 19 verfügt, welche konzentrisch an der Unterseite 20 des Kragens 12 verteilt sind und die über Vorsprünge 21 am Rand 6 der Schale 2 einrastbar sind. Diese Lösung ermöglicht ein einfaches Entfernen des Kragens 12 von der Schale 2, so daß eine einfache Entleerung derselben möglich ist, und deren Reinigung vereinfacht wird.

Das Dach 8 weist auf seiner oberen Außenfläche ein Griffelement 81 auf. Dieses Griffelement 81 kann als Kreisabschnitt ausgebildet sein, aber auch in jeder anderen Art von ergonomisch günstiger Form ausgestaltet werden. Mit Hilfe des Griffelementes 81 läßt sich das Dach 8 einfach abnehmen und die Reinigungsarbeit wird erheblich erleichtert. Es entfällt das umständliche und unhygienische Umgreifen des Dachrandes zur Säuberung der Falle.

## Patentansprüche

1. Schädlingsfalle, insbesondere freiaufstellbares Schneckenfanggerät mit einer Schale für die Aufnahme eines Köders und der gefangenen Schädlinge, sowie mit einem Dach, **dadurch gekennzeichnet**, daß die Schale (2) zur Aufnahme des Köders (3) und der gefangenen Schädlinge als nach oben offener Behälter ausgebildet ist, an dessen Rand (6) ein Kragen (12) befestigbar ist, und daß dieser Kragen (12) einen Innenring (13) und einen Außenring (14) bildet, wobei der Innenring (13) in Form eines Überhanges (13a) frei über den Innenraum (2a) der Schale (2) ragt und sich der Außenring (14) bis in die Nähe der Oberfläche (15) des Bodens (16) erstreckt, auf welchem die Schale (2) aufgestellt ist, und daß auf der Oberseite des Daches (8) ein Griffelement (81) angeordnet ist..

2. Schädlingsfalle nach Anspruch 1, **dadurch gekennzeichnet**, daß am Rand (6) der Schale (2) wenigstens ein Vorsprung (21) vorhanden ist, und daß der Kragen (12) an seiner Unterseite (20) über wenigstens eine Einrastvorrichtung (19) verfügt, und daß der Kragen (12) an der Schale (2) festschnappbar ist.

3. Schädlingsfalle nach Anspruch 1, **dadurch gekennzeichnet**, daß das Dach (8) über einen Abstandhalter (5,7) über der Schale (2) befestigbar ist.

4. Schädlingsfalle nach Anspruch 3, **dadurch gekennzeichnet**, daß der Abstandshalter (5,7) durch einen Ansatz (5) realisiert ist, welcher sich im Zentrum der Schale (2) befindet und mit einem Stiel (7) zusammenwirkt, der das Dach (8) trägt.

5. Schädlingsfalle nach Anspruch 1, **dadurch gekennzeichnet**, daß unterhalb des Daches (8) ein Abweisring (17) vorgesehen ist, welcher nach unten gegen die Schale (2) geneigt ist.

6. Schädlingsfalle nach Anspruch 4 und 5, **dadurch gekennzeichnet**, daß der Abweisring (17) am Stiel (7) oder am Ansatz (5) befestigt ist.

7. Schädlingsfalle nach Anspruch 1, **dadurch gekennzeichnet**, daß wenigstens die Schale (2), das Dach (8) und der Kragen (12) als rotationssymmetrische Kunststoff-Spritzteile hergestellt sind.

8. Schädlingsfalle nach Anspruch 1, **dadurch gekennzeichnet**, daß am Boden (9) der Schale (2) Markierungs-Stege (10) angeordnet sind.

9. Schädlingsfalle nach Anspruch 1, **dadurch gekennzeichnet**, daß das Griffelement (81) auf der Oberseite des Daches (8) als Kreisabschnitt ausgebildet ist.
